# EUROPEAN PATENT APPLICATION

(11) **EP 4 020 387 A2**
(43) Date of publication of application: **29.06.2022**
(21) Application number: 22157046.8
(22) Date of filing: 16.02.2022
(51) Int. Cl.: G06T 7/20

(54) **TARGET TRACKING METHOD AND DEVICE, AND ELECTRONIC APPARATUS**

(30) Priority: 02.03.2021 CN 202110231514
(71) Applicant: BEIJING BAIDU NETCOM SCIENCE TECHNOLOGY CO., LTD., No. 10 Shangdi 10th Street Haidian District Beijing 100085 (CN)
(72) Inventor: SU, Xiangbo, Beijing, 100085 (CN); WANG, Jian, Beijing, 100085 (CN); SUN, Hao, Beijing, 100085 (CN)
(74) Representative: Studio Torta S.p.A.

(57) **Abstract**

The present disclosure provides a target tracking method, a target tracking device (500) and an electronic apparatus. The target tracking method includes: inputting an i^{th} image and an (i-1)^{th} image in a to-be-detected video stream into a target deep learning model, i being an integer greater than 1; detecting a target in the i^{th} image to obtain a first target detection box, and tracking the target in the (i-1)^{th} image to obtain a tracking heatmap; and determining a target tracking result in accordance with the first target detection box, the tracking heatmap and the (i-1)^{th} image.

## Description

### TECHNICAL FIELD

The present disclosure relates to the field of Artificial Intelligence (AI) in the computer technology, in particular to a computer vision technology and a deep learning technology, and more particularly to a target tracking method, a target tracking device, and an electronic apparatus.

### BACKGROUND

Target detection and tracking is a basis for various computer vision tasks. Such targets as human beings and vehicles are detected and tracked for the tasks such as pedestrian analysis, smart traffic and unmanned driving.

Currently, usually three algorithms/models are adopted in a target tracking procedure, i.e., a target detection algorithm/model, a feature extraction algorithm/model, and a multi-target tracking algorithm/model. These three algorithms/models are run in serial. A target in an image is detected through the target detection model to obtain a detection box, then a feature in the detection box of the image is extracted through the feature extraction model, and then the target is tracked through the target tracking algorithm in accordance with the feature.

### SUMMARY

An object of the present disclosure is to provide a target tracking method, a target tracking device and an electronic apparatus.

In a first aspect, the present disclosure provides in some embodiments a target tracking method, including: inputting an i^{th} image and an (i-1)^{th} image in a to-be-detected video stream into a target deep learning model, i being an integer greater than 1; detecting a target in the i^{th} image to obtain a first target detection box, and tracking the target in the (i-1)^{th} image to obtain a tracking heatmap; and determining a target tracking result in accordance with the first target detection box, the tracking heatmap and the (i-1)^{th} image.

According to the target tracking method in the embodiments of the present disclosure, the two adjacent images, i.e., the i^{th} image and the (i-1)^{th} image, are inputted into the target deep learning model, and the target is detected and tracked through the target deep learning model using a predetermined anchor box, so as to obtain a target detection result, i.e., the first target detection box and the tracking heatmap. Next, the target tracking result is determined in accordance with the first target detection box, the tracking heatmap and the (i-1)^{th} image. As compared with a scheme where a target detection model, a feature extraction model and a multi-target tracking model are run in serial to track the target, in the embodiments of the present disclosure, it is able to obtain the first target detection box and the tracking heatmap through one target deep learning model, and determine the target tracking result in accordance with the first target detection box, the tracking heatmap and the (i-1)^{th} image, thereby to improve the target tracking efficiency.

In a second aspect, the present disclosure provides in some embodiments a target tracking device, including: an input module configured to input an i^{th} image and an (i-1)^{th} image in a to-be-detected video stream into a target deep learning model, i being an integer greater than 1; a detection and tracking module configured to detect a target in the i^{th} image to obtain a first target detection box, and track the target in the (i-1)^{th} image to obtain a tracking heatmap; and a determination module configured to determine a target tracking result in accordance with the first target detection box, the tracking heatmap and the (i-1)^{th} image.

In a third aspect, the present disclosure provides in some embodiments an electronic apparatus, including at least one processor and a memory in communication with the at least one processor. The memory is configured to store therein an instruction executed by the at least one processor, and the at least one processor is configured to execute the instruction so as to implement the above-mentioned target tracking method.

In a fourth aspect, the present disclosure provides in some embodiments a non-transient computer-readable storage medium storing therein a computer instruction. The computer instruction is executed by a computer so as to implement the above-mentioned target tracking method.

In a fifth aspect, the present disclosure provides in some embodiments a computer program product comprising a computer program. The computer program is executed by a processor so as to implement the above-mentioned target tracking method.

### BRIEF DESCRIPTION OF THE DRAWINGS

The following drawings are provided to facilitate the understanding of the present disclosure, but shall not be construed as limiting the present disclosure. In these drawings,
Fig.1 is a flow chart of a target tracking method according to an embodiment of the present disclosure;
Fig.2 is another flow chart of the target tracking method according to an embodiment of the present disclosure;
Fig.3 is a schematic view showing a principle of a target deep learning model for the target tracking method according to an embodiment of the present disclosure;
Fig.4 is a schematic view showing a correspondence between a pixel position in an output from a target detection branch and a tracking heatmap in the target tracking method according to an embodiment of the present disclosure;
Fig.5 is a structural view of a target tracking device according to an embodiment of the present disclosure; and
Fig.6 is a block diagram of an electronic apparatus for implementing the target tracking method according to an embodiment of the present disclosure.

### DETAILED DESCRIPTION

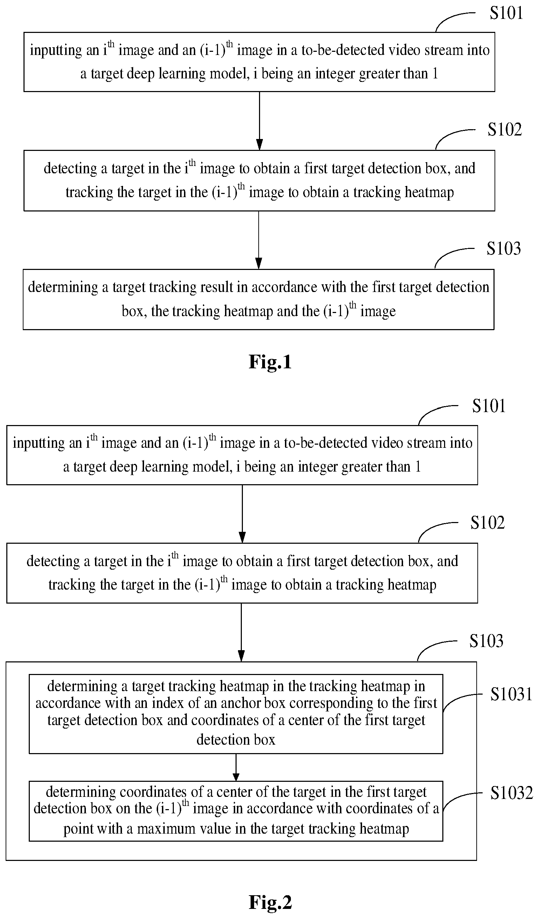

In the following description, numerous details of the embodiments of the present disclosure, which should be deemed merely as exemplary, are set forth with reference to accompanying drawings to provide an understanding of the embodiments of the present disclosure. Therefore, those skilled in the art will appreciate that modifications or replacements may be made in the described embodiments without departing from the scope and spirit of the present disclosure. Further, for clarity and conciseness, descriptions of known functions and structures are omitted. As shown in Fig.1, the present disclosure provides in some embodiments a target tracking method, which includes the following steps.

Step S101: inputting an i^{th} image and an (i-1)^{th} image in a to-be-detected video stream into a target deep learning model, i being an integer greater than 1.

In other words, two adjacent images in the to-be-detected video stream are inputted into the target deep learning model for the subsequent target detection and tracking.

Step S102: detecting a target in the i^{th} image to obtain a first target detection box, and tracking the target in the (i-1)^{th} image to obtain a tracking heatmap.

In other words, through the target deep learning model, the target in the i^{th} image is detected so as to obtain the first target detection box, and the target in the (i-1)^{th} image is tracked so as to obtain the tracking heatmap.

As an instance, anchor boxes with different sizes and scales are preset in the target deep learning model, and the target is detected and tracked through the target deep learning model using the preset anchor box, so as to obtain the first target detection box and the tracking heatmap. It should be appreciated that, the preset anchor box is a normalized anchor box. In a procedure of detecting the target in the i^{th} image to obtain the first target detection box, at first the target is detected to obtain a target anchor box and coordinates of a central pixel, i.e., obtain an initial target detection box. The initial target detection box includes the target anchor box and the coordinates of the central pixel. Next, through transformation (transformation of an area and the coordinates of the central pixel), it is able to obtain the first target detection box corresponding to the i^{th} image.

Step S103: determining a target tracking result in accordance with the first target detection box, the tracking heatmap and the (i-1)^{th} image.

The target tracking result is obtained in accordance with the first target detection box, the tracking heatmap and the (i-1)^{th} image, so as to track the target in the two adjacent images.

According to the target tracking method in the embodiments of the present disclosure, the two adjacent images, i.e., the i^{th} image and the (i-1)^{th} image, are inputted into the target deep learning model, and the target is detected and tracked through the target deep learning model using a predetermined anchor box, so as to obtain a target detection result, i.e., the first target detection box and the tracking heatmap. Next, the target tracking result is determined in accordance with the first target detection box, the tracking heatmap and the (i-1)^{th} image. As compared with a scheme where a target detection model, a feature extraction model and a multi-target tracking model are run in serial to track the target, in the embodiments of the present disclosure, it is able to obtain the first target detection box and the tracking heatmap through one target deep learning model, and determine the target tracking result in accordance with the first target detection box, the tracking heatmap and the (i-1)^{th} image, thereby to improve the target tracking efficiency.

As shown in Fig.2, in a possible embodiment of the present disclosure, Step S103 of determining the target tracking result in accordance with the first target detection box, the tracking heatmap and the (i-1)^{th} image includes: Step S1031 of determining a target tracking heatmap in the tracking heatmap in accordance with an index of an anchor box corresponding to the first target detection box and coordinates of a center of the first target detection box; and Step S1032 of determining coordinates of a center of the target in the first target detection box on the (i-1)^{th} image in accordance with coordinates of a point with a maximum value in the target tracking heatmap. The target tracking result includes the coordinates of the center of the target in the first target detection box on the (i-1)^{th} image and the coordinates of the center of the first target detection box.

During the detection, after the first target detection box, i.e., the target detection result, has been obtained through the preset anchor box, the index of the anchor box corresponding to the first target detection box is determined. Then, the target tracking heatmap is determined in the tracking heatmap in accordance with the index of the anchor box and the coordinates of the center of the first target detection box, i.e., the target tracking heatmap corresponding to the index of the anchor box and the coordinates of the center of the first target detection box is determined in the tracking heatmap. The coordinates of the center of the target in the first target detection box is determined on the (i-1)^{th} image in accordance with coordinates of the point with a maximum value in the target tracking heatmap, so as to obtain the target tracking result. The target tracking result includes the coordinates of the center of the target in the first target detection box on the (i-1)^{th} image as well as the coordinates of the center of the first target detection box. In other words, a tracking result of the i^{th} image and the (i-1)^{th} image includes a pair of coordinates, i.e., the coordinates of the center of the target in the first target detection box on the i^{th} image and the coordinates of the center of the target on the (i-1)^{th} image.

In the embodiments of the present disclosure, the target tracking heatmap is determined in the tracking heatmap in accordance with the index of the anchor box corresponding to the first target detection box as well as the coordinates of the center of the first target detection box, and then the coordinates of the center of the target in the first target detection box is determined on the (i-1)^{th} image in accordance with the coordinates of the point with a maximum value in the target tracking heatmap, so as to obtain the target tracking result. As compared with a mode where a feature is extracted and then the target is tracked through the multi-target tracking algorithm, in the tracking mode in the embodiments of the present disclosure, it is able to improve the tracking efficiency.

In a possible embodiment of the present disclosure, subsequent to determining the coordinates of the center of the target in the first target detection box on the (i-1)^{th} image in accordance with the coordinates of the point with a maximum value in the target tracking heatmap, the target tracking method further includes, in the case that the coordinates of the center match first coordinates, determining that the first target detection box in the i^{th} image and a second target detection box in the (i-1)^{th} image are a detection box for a same target. The first coordinates are coordinates of a center of the second target detection box obtained after detecting the target in the (i-1)^{th} image.

In other words, prior to inputting the i^{th} image and the (i-1)^{th} image into the target deep learning model, the (i-1)^{th} image and an (i-2)^{th} image are inputted into the target deep learning model. The target in the (i-1)^{th} image is detected to obtain the second target detection box, and the target in the (i-2)^{th} image is tracked to obtain a tracking heatmap. A procedure of determining a target tracking result in accordance with the second target detection box, the tracking heatmap obtained through tracking the target in the (i-1)^{th} image as well as the (i-2)^{th} image is similar to the above-mentioned procedure of determining the target tracking result in accordance with the first target detection box, the tracking heatmap and the (i-1)^{th} image, but with different results due to different inputted images. In other words, the target in the (i-1)^{th} image is detected in advance to obtain the second target detection box, and after the coordinates of the center of the target in the first target detection box has been determined on the (i-1)^{th} image, the coordinates of the center are compared with the coordinates of the center of the second target detection box. In the case that the coordinates of the center match the first coordinates, it determines that the first target detection box in the i^{th} image and the second target detection box in the (i-1)^{th} image are a detection box for the same target; otherwise they are detection boxes for different targets.

In the embodiments of the present disclosure, after obtaining the coordinates of the center of the target in the first target detection box on the (i-1)^{th} image, it is necessary to determine whether the coordinates of the center match the first coordinates. In the case that the coordinates of the center match the first coordinates, the first target detection box in the i^{th} image and the second target detection box in the (i-1)^{th} image are determined to be a detection box for the same target. In this way, it is able to determine whether the first target detection box in the i^{th} image and the second target detection box in the (i-1)^{th} image are a detection box for the same target, thereby to track the target accurately.

In a possible embodiment of the present disclosure, the target deep learning model includes a neural network, a feature pyramid network, a target detection branch, and a target tracking branch. The detecting the target in the i^{th} image to obtain the first target detection box and tracking the target in the (i-1)^{th} image to obtain the tracking heatmap includes: processing the i^{th} image and the (i-1)^{th} image through the neural network, so as to output a plurality of first feature maps; processing the plurality of first feature maps through the feature pyramid network, so as to output a plurality of second feature maps; detecting the target through the target detection branch in accordance with the plurality of second feature maps and the preset anchor box, so as to determine the first target detection box in the i^{th} image; and tracking the target through the target tracking branch in accordance with the plurality of second feature maps, so as to obtain multiple classes of tracking heatmaps.

In other words, two adjacent images, i.e., the i^{th} image and the (i-1)^{th} image, are inputted into the target deep learning model, the first feature maps with different dimensions are obtained through the neural network (e.g., DarkNet or ResNet), and the first feature maps are inputted into the feature pyramid network to obtain the second feature maps with different dimensions. The second feature maps with different dimensions are used to sense targets with different dimensions in the i^{th} image in a descending order of the dimensions.

The plurality of second feature maps is inputted into the target detection branch (including a plurality of first convolutional layers connected in series). A plurality of initial detection results whose channel has a same size as respective second feature map is obtained in accordance with the plurality of second feature maps and the preset anchor. A detection box with a maximum detection probability (a probability that the target belongs to a certain class) is taken as an initial target detection box. A scale of the initial target detection box is transformed in accordance with a size of the i^{th} image and a size of the second feature map corresponding to the initial target detection box, so as to obtain the first target detection box.

The plurality of second feature maps is inputted into the target tracking branch (including a plurality of second convolutional layers connected in series), so as to process the plurality of second feature maps to obtain the multi-class tracking heatmap. A target class tracking heatmap is determined in the multi-class tracking heatmap in accordance with the index of the anchor box corresponding to the first target detection box as well as the coordinates of the center of the first target detection box, and the target tracking heatmap is determined in the target class tracking heatmap. A size of the target class tracking heatmap is the same as a size of the second feature map corresponding to the first target detection box.

In the embodiments of the present disclosure, the i^{th} image and the (i-1)^{th} image are processed through the neural network in the target deep learning model, so as to output the plurality of first feature maps. The plurality of first feature maps is processed through the feature pyramid network, so as to output the plurality of second feature maps. The target is detected through the target detection branch in accordance with the plurality of second feature maps and the preset anchor box, so as to determine the first target detection box in the i^{th} image. The target is tracked through the target tracking branch in accordance with the plurality of second feature maps, so as to obtain the multi-classes of tracking heatmaps. In this way, it is able to improve the accuracy of the tracking heatmap.

In a possible embodiment of the present disclosure, each class of heatmap includes W^{∗}H^{∗}A channels, where A represents the quantity of preset anchor boxes and it is an integer greater than 1, and W^{∗}H represents a size of the second feature map corresponding to each class of heatmap. A channel index of the target tracking heatmap is positively related to the index of the anchor box and the coordinates of the center of the first target detection box.

Each tracking heatmap corresponds to one anchor box and coordinates of one center. A target channel index is determined in accordance with the index of the anchor box of the first target detection box and the coordinates of the center of the first target detection box, so as to determine a corresponding target tracking heatmap. For example, a channel index c of the target tracking heatmap is determined through the following equation: c=(a^{∗}W^{∗}H+j^{∗}s1^{∗}H+i^{∗}s2), where a represents the index of the anchor box, (i, j) represents the coordinates of the center of the first target detection box, s1=heatmap_width/image_width, s2=heatmap_height /image_height, and ^{∗} represents a multiplication sign.

In other words, in the embodiments of the present disclosure, the channel index is determined in accordance with the index of the anchor box and the coordinates of the center of the first target detection box, so as to determine the corresponding target tracking heatmap. In this way, it is able to improve the efficiency for determining the target tracking heatmap.

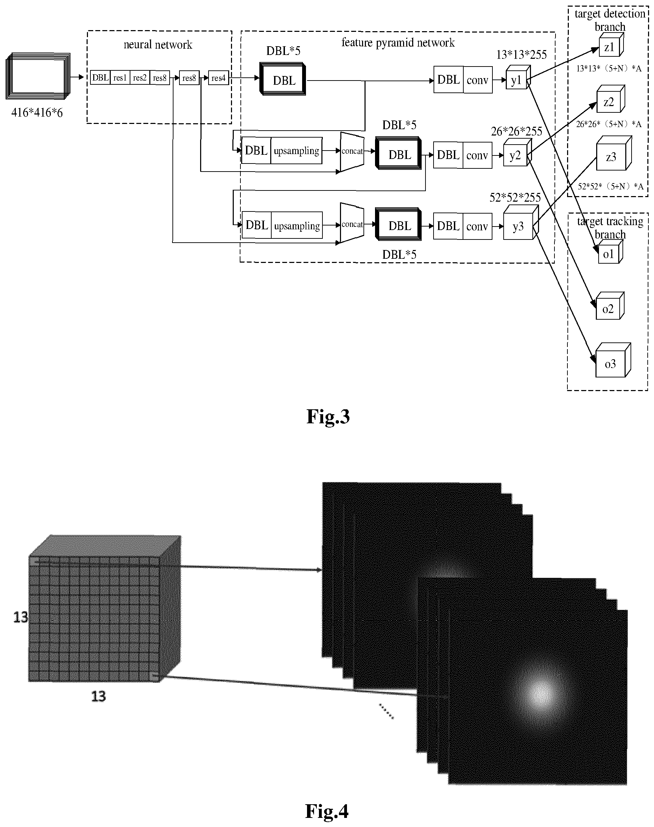

As shown in Fig.3, the above-mentioned method will be described hereinafter in more details in conjunction with a specific embodiment.

An image is extracted from a real-time video stream obtained by a monitoring camera or the like. The image is pre-processed and scaled into a fixed size (e.g., 416^{∗}416), and same RGB average values (e.g., [104, 117, 123]) are subtracted therefrom. The image is pre-processed so as to obtain a same image size and improve the robustness of the model. In the embodiments of the present disclosure, it is necessary to pre-process two adjacent images from the video stream, and inputted into the model. For example, the two images are marked as Pi-1 and Pi respectively.

The pre-processed two images are inputted into, and calculated by, a target detection and tracking model (i.e., the target deep learning model). A basic framework of the model comes from a You Only Look Once: Unified, Real-Time Object Detection (YOLO) model.

As shown in Fig.3, the pre-processed two images Pi-1 and Pi are inputted into the target deep learning model, and processed by a backbone network (i.e., the neural network, e.g., DarkNet or ResNet) to obtain the first feature maps with different dimensions. The first feature maps are inputted into the feature pyramid network to obtain three second feature maps y1, y2 and y3 with three different dimensions, i.e., 13^{∗}13^{∗}255, 26^{∗}26^{∗}255 and 52^{∗}52^{∗}255. The three second feature maps with different dimensions are used to sense targets with different dimensions in the image Pi in a descending order of the dimensions.

It is preset that A different kinds of preset anchor boxes with different scales are generated at a pixel position of each second feature map, and the target detection branch provides an output having a length of (5+N) for each anchor box, so as to indicate a prediction (conf, x, y, W, H, class) of the target detection box on the basis of the anchor box, where conf represents a confidence level of a target in the anchor box, x and y represent an abscissa and an ordinate of a normalized detection box respectively, W and H represent a size of the detection box, and class is a vector with a length of N. A probability that a target belongs to a certain class corresponds to a value in a vector corresponding to an index of the class. For example, when there are N classes, the vector class has a lens of N. When a target belongs to a certain class, an element at a corresponding position in the vector has a value of 1, and the other N-1 elements each have a value of 0. For example, when a target belongs to a second class, a second element in the vector class has a value of 1, and the other elements each have a value of 0. A second feature map y1 is inputted into the target detection branch, so as to obtain a detection prediction result z1 indicating that the quantity of channels is (5+N)^{∗}A and each of a width and a height is 13. Identically, a second feature map y2 is inputted into the target detection branch, so as to obtain a detection prediction result z2 indicating that the quantity of channels is (5+N)^{∗}A and each of a width and a height is 26. A third feature map y3 is inputted into the target detection branch, so as to obtain a detection prediction result z3 indicating that the quantity of channels is (5+N)^{∗}A and each of a width and a height is 13. In other words, z1, z2 and z3 are results obtained after detecting the target in the image Pi. The first target detection box in the image Pi, e.g., a detection box corresponding to a maximum probability belonging to a certain class, is determined in accordance with z1, z2 and z3.

The first feature map y1 is inputted into the target tracking branch, so as to obtain a tracking prediction result o1 indicating that the quantity of channels is 13^{∗}13^{∗}A and each of a width and a height is 13. The second feature map y2 is inputted into the target tracking branch, so as to obtain a tracking prediction result o2 indicating that the quantity of channels is 26^{∗}26^{∗}A and each of a width and a height is 26. The second feature map y3 is inputted into the target tracking branch, so as to obtain a tracking prediction result o3 indicating that the quantity of channels is 52^{∗}52^{∗}A and each of a width and a height is 52.

It should be appreciated that, in Fig.3, DarkNet is taken as an example of the neural network, where Darknetconv2d_BN_Leaky (DBL) represents convolution+Batch Normalization (BN)+Leaky relu (leaky rectified linear unit), resn (e.g., res1, res2, ..., res8) represents the quantity of res_units in each res_block, and concat represents the concatenation of tensors. Upsampling results at a middle layer and a layer after the middle layer in DarkNet are concatenated, and a dimension of a tensor is expanded due to the concatenation. In Fig.3, conv represents a convolutional layer.

During the training of the model, a training target generation mode of the target detection branch is the same as the other method. There exists a correspondence between channels of the target tracking branch and pixels in the target tracking branch. When a training target is generated on a pixel (x, y) of a detection branch z1 and an a^{th} type of anchor box in accordance with a true value of a detection box for a certain target in Pi, a heatmap is generated on a channel (a^{∗}13^{∗}13+y^{∗}13+x) of the target tracking branch, where (a^{∗}13^{∗}13+y^{∗}13+x) represents a channel index of the target in a tracking result of the tracking branch. The heatmap is a Gaussian response map with a center having coordinates obtained after transforming the coordinates of the center of a target in the image Pi-1 corresponding to the target in Pi (e.g., an abscissa of the center is multiplied by s1, and an ordinate is multiplied by s2) as a center and with σ as a variance. A Gaussian peak value is 1, and each pixel spaced apart from a Gaussian center by more than 3σ has a value of 0, as shown in Fig.4. Through this design, each anchor box in the target detection branch uniquely corresponds to one tracking heatmap of a target within a true value of a detection box matching the anchor box.

For example, A anchor boxes are generated in z1 for each pixel point, and there are totally 13^{∗}13^{∗}A anchor boxes corresponding to 13^{∗}13^{∗}A heatmaps in o1. Hence, a heatmap prediction result corresponding to an anchor box of an a^{th} type in an I^{th} row and a J^{th} column in the target detection branch z1 is a C^{th} channel in o1, where index C=a^{∗}13^{∗}13+J^{∗}13+I. Each channel corresponds a tracking heatmap having a width of 13 and a height of 13.

A anchor boxes are generated in z2 for each pixel point, and there are totally 26^{∗}26^{∗}A anchor boxes corresponding to 26^{∗}26^{∗}A heatmaps in o2. Hence, a heatmap prediction result corresponding to an anchor box of an a^{th} type in an I^{th} row and a J^{th} column in the target detection branch z2 is a C^{th} channel in o2, where the index C=a^{∗}26^{∗}26+J^{∗}26+I. Each channel corresponds a tracking heatmap having a width of 26 and a height of 26.

A anchor boxes are generated in z3 for each pixel point, and there are totally 52^{∗}52^{∗}A anchor boxes corresponding to 52^{∗}52^{∗}A heatmaps in o2. Hence, a heatmap prediction result corresponding to an anchor box of an a^{th} type in an I^{th} row and a J^{th} column in the target detection branch z3 is a C^{th} channel in o3, where the index C=a^{∗}52^{∗}52+J^{∗}52+I. Each channel corresponds a tracking heatmap having a width of 52 and a height of 52.

During the prediction, the pre-processed image is inputted into the network to obtain a detection prediction result and a tracking prediction result. A detection output result is post-processed, and coordinates and a scale of the detection box of an original image are calculated in accordance with coordinates and a scale of a normalized detection box. In addition, the result is processed through a Non-Maximum Suppression (NMS) algorithm, so as to obtain a selected final detection box output result. A corresponding target tracking heatmap is obtained from the target tracking branch in accordance with an index of the anchor box corresponding to the detection box output result, and a correspondence between the anchor box and the target tracking heatmap is identical to that mentioned hereinabove. A point with a maximum value is selected from the target tracking heatmap, and coordinates of the point (iz, jz) is obtained, so coordinates of a center of a target in the image Pi-1 corresponding to the target in the image Pi are (iz/heaimap_widih^{∗}image_widih, jz/heaimap_heighi ^{∗}image_heighi), where heaimap_widih and heaimap_heighi represent a width and a height of the target tracking heatmap in the target tracking branch respectively. In this way, with respect to all detection boxes acquired through prediction, it is able to obtain predicted coordinates of a center of a same target in a previous image.

Pi-1 and Pi are inputted into the model to obtain a detection result and a tracking result, which correspond to the coordinates of the target in the image Pi and the coordinates of the center of the same target in the image Pi-1 respectively. Pi and Pi+1 are inputted into the model to obtain a detection result and a tracking result, which correspond to the coordinates of the center the target in the image Pi+1 and the coordinates of the center of the same target in the image Pi respectively. Tracking results on the image Pi+1 obtained in the latter are compared with detection results on the image Pi obtained in the former respectively (e.g., through a Hungary algorithm), and two targets matching each other are just a same target in the two adjacent images. The above steps are repeated continuously, so as to track the target in the video stream. In the embodiments of the present disclosure, the features are extracted from the image once through the deep learning model, so as to obtain the detection boxes for all targets in the image as well as an association result of a same target in two adjacent images. As compared with a conventional method, the detection result and the tracking result are outputted simultaneously through a one-stage model, so it is able to reduce computational resource overheard to the greatest extent, and omit a step of extracting an explicit feature, thereby to enable the model to sense the same target in the two adjacent images through end-to-end training of a large quantity of consecutive images.

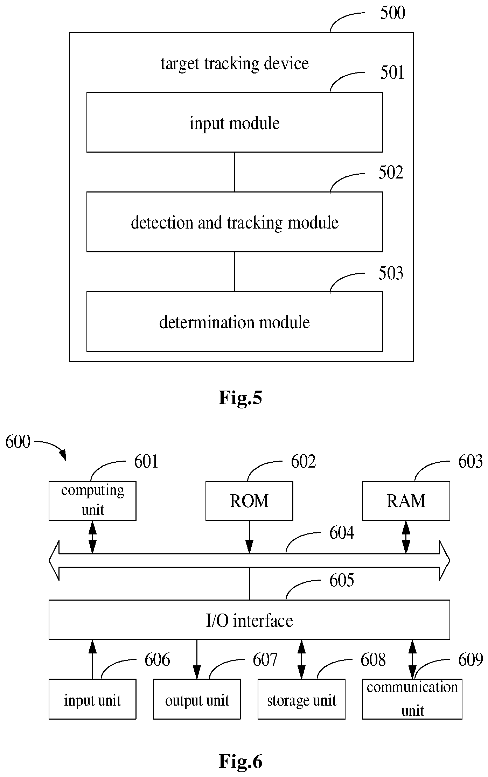

As shown in Fig.5, the present disclosure provides in some embodiments a target tracking device 500, which includes: an input module 501 configured to input an i^{th} image and an (i-1)^{th} image in a to-be-detected video stream into a target deep learning model, i being an integer greater than 1; a detection and tracking module 502 configured to detect a target in the i^{th} image to obtain a first target detection box, and track the target in the (i-1)^{th} image to obtain a tracking heatmap; and a determination module 503 configured to determine a target tracking result in accordance with the first target detection box, the tracking heatmap and the (i-1)^{th} image.

In a possible embodiment of the present disclosure, the determination module 503 includes: a first determination module configured to determine a target tracking heatmap in the tracking heatmap in accordance with an index of an anchor box corresponding to the first target detection box and coordinates of a center of the first target detection box; and a second determination module configured to determine coordinates of a center of the target in the first target detection box on the (i-1)^{th} image in accordance with coordinates of a point with a maximum value in the target tracking heatmap. The target tracking result includes the coordinates of the center of the target in the first target detection box on the (i-1)^{th} image and the coordinates of the center of the first target detection box.

In a possible embodiment of the present disclosure, the target tracking device 500 further includes a third determination module configured to, after the second determination module has determined the coordinates of the center of the target in the first target detection box on the (i-1)^{th} image in accordance with the coordinates of the point with the maximum value in the target tracking heatmap, in the case that the coordinates of the center match first coordinates, determine that the first target detection box in the i^{th} image and a second target detection box in the (i-1)^{th} image are a detection box for a same target. The first coordinates are coordinates of a center of the second target detection box obtained after detecting the target in the (i-1)^{th} image.

In a possible embodiment of the present disclosure, the detection and tracking module includes: a first processing module configured to process the i^{th} image and the (i-1)^{th} image through a neural network, so as to output a plurality of first feature maps; a second processing module configured to process the plurality of first feature maps through a feature pyramid network, so as to output a plurality of second feature maps; a detection module configured to detect the target through a target detection branch in accordance with the plurality of second feature maps and the preset anchor box, so as to determine the first target detection box in the i^{th} image; and a tracking module configured to track the target through a target tracking branch in accordance with the plurality of second feature maps, so as to obtain multiple classes of tracking heatmaps. In a possible embodiment of the present disclosure, each class of heatmap includes W^{∗}H^{∗}A channels, where A represents the quantity of preset anchor boxes and it is an integer greater than 1, and W^{∗}H represents a size of the second feature map corresponding to each class of heatmap. A channel index of the target tracking heatmap is positively related to the index of the anchor box and the coordinates of the center of the first target detection box.

The target tracking device in the embodiments of the present disclosure is used to implement the above-mentioned target tracking method with same technical features and same technical effects, which will thus not be particularly defined herein.

The present disclosure further provides in some embodiments an electronic apparatus, a computer-readable storage medium and a computer program product.

The non-transient computer-readable storage medium in the embodiments of the present disclosure is configured to store therein a computer instruction. The computer instruction is executed by a computer so as to implement the above-mentioned target tracking method. The computer program product in the embodiments of the present disclosure includes a computer program. The computer program is executed by a computer so as to implement the above-mentioned target tracking method.

Fig.6 is a schematic block diagram of an exemplary electronic apparatus 600 in which embodiments of the present disclosure may be implemented. The electronic apparatus is intended to represent all kinds of digital computers, such as a laptop computer, a desktop computer, a work station, a personal digital assistant, a server, a blade server, a main frame or other suitable computers. The electronic apparatus may also represent all kinds of mobile devices, such as a personal digital assistant, a cell phone, a smart phone, a wearable device and other similar computing devices. The components shown here, their connections and relationships, and their functions, are meant to be exemplary only, and are not meant to limit implementations of the present disclosure described and/or claimed herein.

As shown in Fig.6, the electronic apparatus 600 includes a computing unit 601 configured to execute various suitable actions and processings in accordance with computer programs stored in a Read Only Memory (ROM) 602 or computer programs loaded into a Random Access Memory (RAM) 603 via a storage unit 606. Various programs and data desired for the operation of the electronic apparatus 600 may also be stored in the RAM 603. The computing unit 601, the ROM 602 and the RAM 603 may be connected to each other via a bus 604. In addition, an input/output (I/O) interface 605 may also be connected to the bus 604.

Multiple components in the electronic apparatus 600 are connected to the I/O interface 605. The multiple components include: an input unit 606, e.g., a keyboard, a mouse and the like; an output unit 607, e.g., a variety of displays, loudspeakers, and the like; a storage unit 606, e.g., a magnetic disk, an optic disk and the like; and a communication unit 609, e.g., a network card, a modem, a wireless transceiver, and the like. The communication unit 609 allows the electronic apparatus 600 to exchange information/data with other devices through a computer network and/or other telecommunication networks, such as the Internet.

The computing unit 601 may be any general purpose and/or special purpose processing components having a processing and computing capability. Some examples of the computing unit 601 include, but are not limited to: a central processing unit (CPU), a graphic processing unit (GPU), various special purpose artificial intelligence (AI) computing chips, various computing units running a machine learning model algorithm, a digital signal processor (DSP), and any suitable processor, controller, microcontroller, etc. The computing unit 601 carries out the aforementioned methods and processes, e.g., the target tracking method. For example, in some embodiments of the present disclosure, the target tracking method may be implemented as a computer software program tangibly embodied in a machine readable medium such as the storage unit 606. In some embodiments of the present disclosure, all or a part of the computer program may be loaded and/or installed on the electronic apparatus 600 through the ROM 602 and/or the communication unit 609. When the computer program is loaded into the RAM 603 and executed by the computing unit 601, one or more steps of the foregoing target tracking method may be implemented. Optionally, in some other embodiments of the present disclosure, the computing unit 601 may be configured in any other suitable manner (e.g., by means of firmware) to implement the target tracking method. Various implementations of the aforementioned systems and techniques may be implemented in a digital electronic circuit system, an integrated circuit system, a field-programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include an implementation in form of one or more computer programs. The one or more computer programs may be executed and/or interpreted on a programmable system including at least one programmable processor. The programmable processor may be a special purpose or general purpose programmable processor, may receive data and instructions from a storage system, at least one input device and at least one output device, and may transmit data and instructions to the storage system, the at least one input device and the at least one output device.

Program codes for implementing the methods of the present disclosure may be written in one programming language or any combination of multiple programming languages. These program codes may be provided to a processor or controller of a general purpose computer, a special purpose computer, or other programmable data processing device, such that the functions/operations specified in the flow diagram and/or block diagram are implemented when the program codes are executed by the processor or controller. The program codes may be run entirely on a machine, run partially on the machine, run partially on the machine and partially on a remote machine as a standalone software package, or run entirely on the remote machine or server.

In the context of the present disclosure, the machine readable medium may be a tangible medium, and may include or store a program used by an instruction execution system, device or apparatus, or a program used in conjunction with the instruction execution system, device or apparatus. The machine readable medium may be a machine readable signal medium or a machine readable storage medium. The machine readable medium includes, but is not limited to: an electronic, magnetic, optical, electromagnetic, infrared, or semiconductor system, device or apparatus, or any suitable combination thereof. A more specific example of the machine readable storage medium includes: an electrical connection based on one or more wires, a portable computer disk, a hard disk, a random access memory (RAM), a read only memory (ROM), an erasable programmable read only memory (EPROM or flash memory), an optic fiber, a portable compact disc read only memory (CD-ROM), an optical storage device, a magnetic storage device, or any suitable combination thereof.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or that includes a middle-ware component (e.g., an application server), or that includes a front-end component (e.g., a client computer having a graphical user interface or a Web browser through which a user can interact with an implementation of the system and technique), or any combination of such back-end, middleware, or front-end components. The components of the system can be interconnected by any form or medium of digital data communication (e.g., a communication network). Examples of communication networks include a local area network (LAN), a wide area network (WAN), the Internet and a blockchain network.

The computer system can include a client and a server. The client and server are generally remote from each other and typically interact through a communication network. The relationship of client and server arises by virtue of computer programs running on respective computers and having a client-server relationship to each other. The server may be a cloud server, also called as cloud computing server or cloud server, which is a host product in a cloud calculating service system, so as to overcome such defects as large management difficulty and insufficient service extensibility in a conventional physical host and a Virtual Private Server (VPS). The server may also be a server of a distributed system, or a server combined with blockchain.

It should be appreciated that, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, and there is no limitation in this regard.

The foregoing specific implementations constitute no limitation on the scope of the present disclosure. It is appreciated by those skilled in the art, various modifications, combinations, sub-combinations and replacements may be made according to design requirements and other factors. Any modifications, equivalent replacements and improvements made without deviating from the spirit and principle of the present disclosure shall be deemed as falling within the scope of the present disclosure.

## Claims

1. A target tracking method, comprising:
inputting (S101) an i^{th} image and an (i-1)^{th} image in a to-be-detected video stream into a target deep learning model, i being an integer greater than 1;
detecting (S102) a target in the i^{th} image to obtain a first target detection box, and tracking the target in the (i-1)^{th} image to obtain a tracking heatmap; and
determining (S103) a target tracking result in accordance with the first target detection box, the tracking heatmap and the (i-1)^{th} image.

2. The target tracking method according to claim 1, wherein the determining the target tracking result in accordance with the first target detection box, the tracking heatmap and the (i-1)^{th} image comprises:
determining (S1031) a target tracking heatmap in the tracking heatmap in accordance with an index of an anchor box corresponding to the first target detection box and coordinates of a center of the first target detection box; and
determining (S1032) coordinates of a center of the target in the first target detection box on the (i-1)^{th} image in accordance with coordinates of a point with a maximum value in the target tracking heatmap,
wherein the target tracking result comprises the coordinates of the center of the target in the first target detection box on the (i-1)^{th} image and the coordinates of the center of the first target detection box.

3. The target tracking method according to claim 2, wherein subsequent to determining (S1032) the coordinates of the center of the target in the first target detection box on the (i-1)^{th} image in accordance with the coordinates of the point with a maximum value in the target tracking heatmap, the target tracking method further comprises,
in the case that the coordinates of the center match first coordinates, determining that the first target detection box in the i^{th} image and a second target detection box in the (i-1)^{th} image are a detection box for a same target, wherein the first coordinates are coordinates of a center of the second target detection box obtained after detecting the target in the (i-1)^{th} image.

4. The target tracking method according to claim 2, wherein the detecting (S102) the target in the i^{th} image to obtain the first target detection box and tracking the target in the (i-1)^{th} image to obtain the tracking heatmap comprises:
processing the i^{th} image and the (i-1)^{th} image through a neural network, to output a plurality of first feature maps;
processing the plurality of first feature maps through a feature pyramid network, to output a plurality of second feature maps;
detecting the target through a target detection branch in accordance with the plurality of second feature maps and the preset anchor box, to determine the first target detection box in the i^{th} image; and
tracking the target through a target tracking branch in accordance with the plurality of second feature maps, to obtain multiple classes of tracking heatmaps.

5. The target tracking method according to claim 4, wherein each class of heatmap comprises W^{∗}H^{∗}A channels, where A represents the quantity of preset anchor boxes and it is an integer greater than 1, and W^{∗}H represents a size of the second feature map corresponding to a class of heatmap,
wherein a channel index of the target tracking heatmap is positively related to the index of the anchor box and the coordinates of the center of the first target detection box.

6. A target tracking device (500), comprising:
an input module (501) configured to input an i^{th} image and an (i-1)^{th} image in a to-be-detected video stream into a target deep learning model, i being an integer greater than 1;
a detection and tracking module (502) configured to detect a target in the i^{th} image to obtain a first target detection box, and track the target in the (i-1)^{th} image to obtain a tracking heatmap; and
a determination module (503) configured to determine a target tracking result in accordance with the first target detection box, the tracking heatmap and the (i-1)^{th} image.

7. The target tracking device (500) according to claim 6, wherein the determination module (503) comprises:
a first determination module configured to determine a target tracking heatmap in the tracking heatmap in accordance with an index of an anchor box corresponding to the first target detection box and coordinates of a center of the first target detection box; and
a second determination module configured to determine coordinates of a center of the target in the first target detection box on the (i-1)^{th} image in accordance with coordinates of a point with a maximum value in the target tracking heatmap,
wherein the target tracking result comprises the coordinates of the center of the target in the first target detection box on the (i-1)^{th} image and the coordinates of the center of the first target detection box.

8. The target tracking device (500) according to claim 7, further comprising:
a third determination module configured to, after the second determination module has determined the coordinates of the center of the target in the first target detection box on the (i-1)^{th} image in accordance with the coordinates of the point with the maximum value in the target tracking heatmap, in the case that the coordinates of the center match first coordinates, determine that the first target detection box in the i^{th} image and a second target detection box in the (i-1)^{th} image are a detection box for a same target, wherein the first coordinates are coordinates of a center of the second target detection box obtained after detecting the target in the (i-1)^{th} image.

9. The target tracking device (500) according to claim 7, wherein the detection and tracking module (502) comprises:
a first processing module configured to process the i^{th} image and the (i-1)^{th} image through a neural network, to output a plurality of first feature maps;
a second processing module configured to process the plurality of first feature maps through a feature pyramid network, to output a plurality of second feature maps;
a detection module configured to detect the target through a target detection branch in accordance with the plurality of second feature maps and the preset anchor box, to determine the first target detection box in the i^{th} image; and
a tracking module configured to track the target through a target tracking branch in accordance with the plurality of second feature maps, to obtain multiple classes of tracking heatmaps.

10. The target tracking device (500) according to claim 9, wherein each class of heatmap comprises W^{∗}H^{∗}A channels, where A represents the quantity of preset anchor boxes and it is an integer greater than 1, and W^{∗}H represents a size of the second feature map corresponding to a class of heatmap,
wherein a channel index of the target tracking heatmap is positively related to the index of the anchor box and the coordinates of the center of the first target detection box.

11. An electronic apparatus (600), comprising:
at least one processor (601); and
a memory (602, 603) in communication connection with the at least one processor (601), wherein
the memory (602, 603) is configured to store therein an instruction executed by the at least one processor (601), and the at least one processor (601) is configured to execute the instruction to implement the target tracking method according to any one of claims 1 to 5.

12. A non-transient computer-readable storage medium storing therein a computer instruction, wherein the computer instruction is executed by a computer (600) to implement the target tracking method according to any one of claims 1 to 5.

13. A computer program product, comprising a computer program, wherein the computer program is executed by a processor (601) to implement the target tracking method according to any one of claims 1 to 5.
